# EUROPÄISCHE PATENTSCHRIFT

(11) **EP 3 281 275 B1**
(45) Veröffentlichungstag und Bekanntmachung des Hinweises auf die Patenterteilung: **13.10.2021**
(21) Anmeldenummer: 16715848.4
(22) Anmeldetag: 08.04.2016
(51) Int. Cl.: H02J 50/00, H02J 50/10, H02J 50/90, H01F 38/14, B60L 53/34, B60L 53/126

(54) **VORRICHTUNG ZUR KONTAKTLOSEN INDUKTIVEN ENERGIEÜBERTRAGUNG UND BETRIEBSVERFAHREN FÜR EINE DERARTIGE VORRICHTUNG**
APPARATUS FOR CONTACTLESS INDUCTIVE ENERGY TRANSMISSION AND OPERATING METHOD FOR SUCH AN APPARATUS
DISPOSITIF DE TRANSFERT D'ÉNERGIE PAR INDUCTION SANS CONTACT ET PROCÉDÉ DE FONCTIONNEMENT D'UN TEL DISPOSITIF

(30) Priorität: 09.04.2015 DE 102015105359; 19.08.2015 DE 102015113723
(43) Veröffentlichungstag der Anmeldung: 14.02.2018
(73) Patentinhaber: Weidmüller Interface GmbH & Co. KG, 32758 Detmold (DE)
(72) Erfinder: STEINMETZ, Andreas, 32760 Detmold (DE); GRÜNBERG, Olaf, 32825 Blomberg (DE)
(74) Vertreter: Kleine, Hubertus
(86) Internationale Anmeldenummer: PCT/EP2016/057826
(87) Internationale Veröffentlichungsnummer: WO 2016/162520

(56) Entgegenhaltungen:
- WO-A1-2006/108787
- JP-A- 2013 031 315
- JP-A- 2013 078 198
- US-A1- 2012 262 002
- US-A1- 2015 035 379

## Beschreibung

Die Erfindung betrifft ein System zur kontaktlosen Energieübertragung von einem Primärteil auf ein Sekundärteil, die jeweils mindestens eine Spule aufweisen, die induktiv miteinander koppelbar sind, wobei anhand eines von den Spulen erzeugten und mit mindestens einem Magnetfeldsensor gemessenen Magnetfelds ein lateraler Versatz des Sekundärteils gegenüber dem Primärteil bestimmt wird. Die Erfindung betrifft weiterhin ein Betriebsverfahren für ein System zur kontaktlosen induktiven Energieübertragung von einer Spule eines Primärteils zu einer Spule eines Sekundärteils.

Gegenüber Steckverbindern, bei denen eine Energieübertragung über mechanisch zu verbindende bzw. zu trennende Kontaktelemente erfolgt, besitzen kontaktlose Systeme zur Energieübertragung Vorteile bezüglich eines Verschleißes durch eine hohe Zahl von Steckzyklen oder starken Vibrationen. Zudem ist ein Kontaktabbrand bei einem Ein- oder Ausstecken unter elektrischer Last verhindert. Auch die Gefahr des Ausbildens von Lichtbögen beim Trennen von Steckverbindern mit einer hohen Strombelastung ist bei kontaktlosen Systemen zur Energieübertragung nicht gegeben. Schließlich liegt bei der kontaktlosen Übertragung von Energie eine galvanische Trennung zwischen dem Primärteil und dem Sekundärteil vor, die beispielsweise beim Einsatz im medizinischen Bereich gefordert sein kann. Das Fehlen der mechanisch aufwendig ineinander greifenden Kontakte ermöglicht zudem eine Gestaltung des Systems mit möglichst glatten Oberflächen, was die kontaktlosen Systeme zur Energieübertragung geeignet für Anwendungszwecke mit einer erhöhten Anforderung an Sauberkeit/Hygiene prädestiniert, beispielsweise im Lebensmittelbereich.

Insbesondere die hohe Verschleißfestigkeit macht eine kontaktlose induktive Energieübertragung auch im Automatisierungsbereich interessant, beispielsweise zur Übertragung von Energie an ein Wechselwerkzeug eines Roboters.

Die Druckschrift WO 2013/087676 A2 beschreibt ein System zur kontaktlosen induktiven Energieübertragung von einem Primärteil zu einem Sekundärteil, die eine mechanische Steckvorrichtung zur Energieübertragung beispielsweise an ein Wechselwerkzeug eines Roboters ersetzen kann. Primär- und Sekundärteil weisen jeweils mindestens eine Spule auf, die induktiv miteinander koppelbar sind und die jeweils mit einem Ferritkern zusammenwirken. Der Ferritkern erhöht den magnetischen Fluss durch seine Permeabilität derart, dass auch bei kleinen Baugrößen des Systems und kleinen Übertragungsflächen hohe elektrische Leistungen übertragen werden können.

Eine Energieübertragung ist durch den hohen magnetischen Fluss dabei auch dann bereits möglich, wenn das Primär- und das Sekundärteil sich (noch) nicht in einer Position befinden, in der der Abstand zwischen ihnen minimal ist, sondern wenn ein Spalt zwischen ihnen besteht. Ebenso kann eine Energieübertragung auch bei einem gewissen seitlichen (lateralen) Versatz von Primär- und Sekundärteil erfolgen, also wenn sich die Spulen von Primär- und das Sekundärteil nicht auf einer gemeinsamen Achse befinden. Ein zu großer Abstand und/oder ein zu großer seitlicher Versatz beeinflusst jedoch die maximal übertragbare Leistung. Auch wenn eine Versorgung eines angeschlossenen Geräts in manchen Betriebszuständen des Geräts trotz eines seitlichen Versatzes oder eines großen Abstands möglich ist, kann es in anderen Betriebszuständen, in denen ein höherer Leistungsbedarf vorliegt, zu unvorhersehbaren Betriebsstörungen des Geräts kommen, da die geforderte Leistung nicht übertragen werden kann.

Die Druckschrift US 2010/0201315 A1 beschreibt ebenfalls eine Anordnung zur induktiven Energieübertragung. Die Anordnung ist insbesondere als kabellose Ladevorrichtung für Mobilgeräte geeignet. Ein Primärteil der Anordnung kann beispielsweise unterhalb einer Tischplatte montiert werden, so dass ein Mobilgerät, beispielsweise ein Mobiltelefon, das ein Sekundärteil der Anordnung aufweist, durch einfaches Auflegen auf die Tischplatte geladen werden kann.

Im Primär- oder im Sekundärteil sind um die entsprechende Spule herum Hilfsspulen angeordnet, die als Magnetfeldsensoren wirken. Aus der Größe der Magnetfelder, die durch die Hilfsspulen gemessen werden, wird ein lateraler Versatz zwischen Primär- und Sekundärteil ermittelt und dem Benutzer angezeigt, so dass dieser das Mobilgerät und damit das Sekundärteil lateral ausgerichtet zum Primärteil positionieren kann. Alternativ wird der maximal mögliche Ladestrom ermittelt und es wird signalisiert, wenn dieser oberhalb eines vorgegebenen Schwellenwertes liegt. Ein entsprechendes Signal zeigt dem Benutzer dann eine zumindest ausreichend gute laterale Positionierung des Mobilgeräts an.

Die Druckschrift US 2012/0262002 A1 beschreibt eine Anordnung mit einem bodenmontierten Primärteil und einem Sekundärteil, das an einer Unterseite eines Elektrofahrzeugs angeordnet ist. Beide Teile weisen Spulen auf, über die Energie an das Fahrzeug übertragen werden kann, wenn die Spulen übereinander stehen. Am Sekundärteil sind drei gekreuzte Hilfsspulen angeordnet, mit deren Hilfe beim Annähern des Fahrzeugs an das Primärteil ein von der Primärspule erzeugtes Feld in drei Raumrichtungen vermessen wird. Aus den Messwerten wird eine Richtungsanweisung generiert, mit deren Hilfe ein Fahrzeugführer das Fahrzeug in Richtung des Sekundärteils bewegen und lateral korrekt positionieren kann.

Die beschriebenen Verfahren bieten in Anwendungen, bei denen es auf eine hohe Verfügbarkeit der versorgten Komponenten und höhere übertragene Leistungen ankommt, beispielsweise bei Industrierobotern, jedoch keine ausreichende Funktionssicherheit, da Abstandsvariationen zu einer abrupten Übertragungsunterbrechung führen können.

Aus der Druckschrift JP 2013/078198 A ist eine Anordnung zur induktiven Energieübertragung bekannt, bei der neben einer lateralen Positionsbestimmung auch ein Spulenabstand über ein Magnetfeld ermittelt wird, das von einer separaten Spule erzeugt wird. Die Druckschrift JP 2013/031315 A zeigt in einem Ausführungsbeispiel eine vergleichbare Anordnung mit einer separaten Spule zur Abstandsbestimmung. In einem weiteren Ausführungsbeispiel ist beschrieben, dass auch die Primärspule selbst zur Erzeugung eines Magnetfelds zu Abstandsbestimmung eingesetzt werden kann. Energieübertragung unterbrochen und die Primärspule mit einem Anregungspuls beaufschlagt. Dieser Anregungspuls führt zu einem abklingenden Induktionssignal in Spulen zur Positionsdetektion. Nach dem Empfang des abklingenden Induktionssignals kann die Primärspule wieder mit einem periodischen Signal zur Energieübertragung beaufschlagt werden. Die Unterbrechung der Energieübertragung zur Positionsbestimmung vermindert allerdings die übertragbare Leitung von der Primärauf die Sekundärspule.

Es ist eine Aufgabe der vorliegenden Erfindung, unvorhersehbare Betriebsstörungen bei einer Versorgung eines Geräts durch ein eingangs genanntes System zur kontaktlosen Energieübertragung durch eine Abstandsbestimmung zwischen den Spulen zur Energieübertragung möglichst vollständig auszuschalten, ohne die Energieübertragung zu beeinflussen.

Diese Aufgabe wird durch ein System bzw. ein Betriebsverfahren für ein solches System mit den jeweiligen Merkmalen der unabhängigen Ansprüche gelöst. Vorteilhafte Ausgestaltungen und Weiterbildungen des Systems und des Betriebsverfahrens sind in den abhängigen Ansprüchen angegeben.

Ein System zur kontaktlosen induktiven Energieübertragung der eingangs genannten Art zeichnet sich dadurch aus, dass das System dazu eingerichtet ist, anhand des von dem mindestens einen Magnetfeldsensor gemessenen Magnetfelds zudem einen Abstand entlang einer Achse der primärseitigen Spule vom Sekundärteil zum Primärteil zu bestimmen, wobei das von dem mindestens einen Magnetfeldsensor gemessene Magnetfeld ein während der Energieübertragung erzeugtes Streufeld der mindestens eine Spule des Primärteils und der mindestens einen Spule des Sekundärteils ist.

Die zur Energieübertragung verwendeten Spulen des Primärteils und des Sekundärteils erzeugen ein Streufeld, das erfindungsgemäß zur vollständigen Positionsbestimmung des Sekundärteils relativ zum Primärteil verwendet wird.

Durch Bestimmung des axialen Abstands und nicht nur des lateralen Versatzes kann jegliche, auch beginnende Positionierungsungenauigkeit des Sekundärteils gegenüber dem Primärteil rechtzeitig erkannt werden. Die bestimmte Position kann z.B. über ein Netzwerk an eine Steuereinrichtung beispielsweise einer Automatisierungsanlage übertragen werden. Bei Abweichungen von einer Sollposition kann dann ein Benutzer oder Bediener informiert werden um ggf. die Positionierung des Sekundärteils gegenüber dem Primärteil zu justieren.

Eine Positionsbestimmung setzt üblicherweise den Einsatz eines Senders für ein Testsignal und eines Empfängers für das Testsignal voraus. Durch die Verwendung des Streufelds der Spulen für die Energieübertragung wird ein sowieso vorhandenes Signal als Testsignal benutzt, wodurch auf den Sender für das Testsignal verzichtet werden kann. Die Positionsbestimmung kann durch Hinzufügen nur eines Empfängers für das Testsignal, dem mindestens einen Magnetfeldsensor, umgesetzt werden.

In einer vorteilhaften Ausgestaltung des Systems ist der mindestens eine Magnetfeldsensor mindestens eine Hilfsspule, in der die Spulen ein Signal induzieren. Zur Energieübertragung wird ein magnetisches Wechselfeld eingesetzt. Eine Magnetfeldmessung kann somit besonders einfach mithilfe einer Hilfsspule erfolgen.

In einer weiteren vorteilhaften Ausgestaltung des Systems ist der mindestens eine Magnetfeldsensor im Primärteil angeordnet. So kann die Information über die Positionierung des Sekundärteils unmittelbar im Primärteil ermittelt werden, wobei keine Rückmeldung von dem Sekundärteil an das Primärteil notwendig ist, um ein sicheres Betreiben des Primärteils zu garantieren. Das Primärteil kann als stationäres Teil der Übertragungseinrichtung auch datentechnisch mit einer Automatisierungssteuerung verbunden sein und die Positionsinformation an die Automatisierungssteuerung weitergeben.

In einer weiteren vorteilhaften Ausgestaltung des Systems ist der mindestens eine Magnetfeldsensor im Primär- oder Sekundärteil seitlich versetzt zu der jeweiligen Spule angeordnet. Bevorzugt sind mindestens zwei Magnetfeldsensoren in dem Primär- und/oder Sekundärteil vorgesehen, die paarweise symmetrisch um eine Längsachse der jeweiligen Spule angeordnet sind. Besonders bevorzugt sind vier Magnetfeldsensoren in dem Primär- und/oder Sekundärteil um die jeweilige Spule herum angeordnet. Bei der paarweisen Anordnung können Signale der Magnetfeldsensoren miteinander verglichen werden bzw. Differenzen der Signale betrachtet werden, die für einen seitlichen Versatz maßgeblich sind. Durch den Einsatz von vier Sensoren können ein Abstand von Primär- und Sekundärteil und ein seitlicher Versatz in jede Richtung bestimmt werden. In alternativen Ausgestaltungen können auch mehr als vier Magnetfeldsensoren eingesetzt werden, beispielsweise um eine Genauigkeit, mit der Abstand und/oder Versatz bestimmt werden können, weiter zu steigern.

Ein erfindungsgemäßes Betriebsverfahren für ein System zur kontaktlosen induktiven Energieübertragung von einer Spule eines Primärteils zu einer Spule eines Sekundärteils zeichnet sich dadurch aus, dass anhand eines von den Spulen während der Energieübertragung erzeugten und mit mindestens einem Magnetfeldsensor gemessenen Magnetfelds sowohl der laterale Versatz als auch der axiale Abstand des Sekundärteils zum Primärteil bestimmt wird. Es ergeben sich die im Zusammenhang mit dem Systems beschriebenen Vorteile.

Bei einer vorteilhaften Ausgestaltung des Betriebsverfahrens wird die relative Position anhand von Messwerten von vier Magnetfeldsensoren ermittelt, die in dem Primärteil um dessen Spule herum angeordnet sind. Durch den Einsatz von vier Sensoren können ein Abstand von Primär- und Sekundärteil und ein seitlicher Versatz in jede Richtung bestimmt werden. Bevorzugt wird als mindestens ein Magnetfeldsensor mindestens eine Hilfsspule eingesetzt, wobei ein in der mindestens einen Hilfsspule induziertes Signal gemessen wird. Weiter bevorzugt wird als Signal eine Signalamplitude, insbesondere eine Spannungsamplitude, der mindestens einen Hilfsspule ausgewertet.

Bei einer weiteren vorteilhaften Ausgestaltung des Betriebsverfahrens werden die Signalamplituden von jeweils zwei paarweise gegenüberliegenden Hilfsspulen miteinander verrechnet, um den lateralen Versatz des Sekundärteils gegenüber dem Primärteil zu bestimmen und um den axialen Abstand vom Sekundärteil zum Primärteil zu bestimmen. Bevorzugt umfasst der laterale Versatz einen radialen Abstand zwischen Achsen der Spulen sowie einen Winkel zwischen einem Abstandsvektor, der von der Achse der Spule des Primärteils zu der Achse der Spule des Sekundärteils reicht, und einer definierten Raumrichtung umfasst. Der Versatz wird so in Polarkoordinaten angegeben, woraus der seitliche Abstand der Spulenachsen unmittelbar hervorgeht, als und auch die Richtung, in der das Sekundärteil gegenüber dem Primärteil verschoben ist. Die Richtung, in der der Versatz vorliegt, kann beispielsweise bei einem sich gegenüber dem Primärteil drehenden Sekundärteil Information über eine eventuell vorliegende Unwucht der Drehung geben, auch wenn der Absolutwert des seitlichen Abstands der Spulenachsen konstant ist.

Bei einer weiteren vorteilhaften Ausgestaltung des Betriebsverfahrens wird eine Energieübertragung von dem Primärteil zu dem Sekundärteil unterbunden, wenn der laterale Versatz des Sekundärteils gegenüber dem Primärteil und/oder der Abstand vom Sekundärteil zum Primärteil, d.h. die Größe des Luftspalts, einen vorgegebenen Grenzwert überschreitet. Auf diese Weise kann eine störungsfreie Energieübertragung bis hin zur spezifizierten Maximalleistung sichergestellt werden. Die Grenzwerte können dabei in Form von Tabellen oder einem Funktionszusammenhang berücksichtigen, inwieweit eine gleichzeitig vorliegende Kombination von seitlichem Versatz und Abstand zugelassen sind.

Die Erfindung wird nachfolgend anhand von Ausführungsbeispielen mithilfe von fünf Figuren näher erläutert. Die Figuren zeigen:
- Figur 1: eine Schnittansicht eines Systems zur kontaktlosen Energieübertragung;
- Figur 2: eine weitere Schnittansicht des in Figur 1 dargestellten Systems,
- Figur 3: eine schematische Darstellung eines Systems zur kontaktlosen Energieübertragung mit einem seitlichen Versatz zwischen Primär- und Sekundärteil;
- Figur 4: ein Diagramm, in dem die Höhe von Signalen von Hilfsspulen zur Positionserfassung in Abhängigkeit eines Winkels eines seitlichen Versatzes dargestellt ist; und
- Figur 5: ein Diagramm, in dem Differenzen der Signale der Hilfsspulen zur Positionserfassung in Abhängigkeit eines Winkels eines seitlichen Versatzes dargestellt sind.

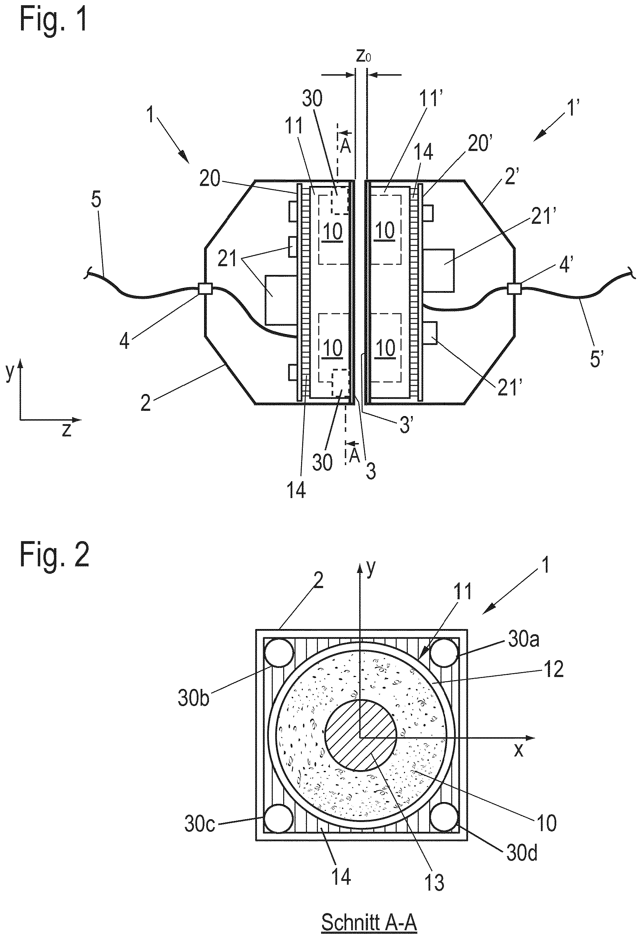

Figur 1 zeigt ein schematisches Schnittbild eines anmeldungsgemäßen Systems zur kontaktlosen Energieübertragung von einem Primärteil 1 zu einem Sekundärteil 1'. In Figur 2 ist das Primärteil 1 in einem Schnitt entlang der in Figur 1 dargestellten Schnittlinie A-A wiedergegeben.

Elemente, die dem Primärteil 1 zugeordnet sind, im Folgenden auch primärseitige Elemente genannt, tragen in den Figuren Bezugszeichen ohne Apostroph. Elemente, die dem Sekundärteil 1' zugeordnet sind, im Folgenden auch sekundärseitige Elemente genannt, tragen Bezugszeichen mit einem entsprechenden Apostroph. Dabei sind primärseitige und sekundärseitige Elemente, die die gleiche oder eine vergleichbare Funktion aufweisen, mit Bezugszeichen mit denselben Zahlen versehen. Wenn im Folgenden nicht explizit auf die Primär- oder Sekundärseite verwiesen wird, werden Bezugszeichen ohne Apostroph verwendet, die sich auf beide Seiten beziehen.

Primärteil 1 und Sekundärteil 1' weisen jeweils ein Gehäuse 2 auf, das aus einem für Steckergehäuse üblichen Material wie Kunststoff, Aluminium oder Edelstahl oder dergleichen gefertigt sein kann. Die Gehäuse 2 sind halbschalenförmig ausgeführt, wobei ihre vordere Seite mit einer Frontplatte 3 verschlossen ist. Im hinteren Bereich, von der Frontplatte 3 weg weisend, ist in das Gehäuse 2 eine Kabeldurchführung 4 für ein Anschlusskabel 5 eingebracht.

Unmittelbar hinter der Frontplatte 3 ist jeweils eine Spule 10 angeordnet, die auf einen Ferritkern 11 gewickelt ist, bzw. auf einen Spulenkörper gewickelt ist, der in den Ferritkern 11 eingelegt ist. Die Spule 10 kann mit einem einzelnen Leiter gewickelt sein. Zur Verringerung des Skin-Effekts ist allerdings eine Verwendung von mehradriger Hochfrequenzlitze bevorzugt.

Im dargestellten Ausführungsbeispiel ist der Ferritkern 11 primär- und sekundärseitig ein runder Topfkern mit einem äußeren Rand 12 und einem dazu konzentrischen inneren Dom 13. Ein solcher Kern wird auch als (zylindersymmetrischer) E-Kern bezeichnet. Dabei sind die Querschnitte des äußeren Rands 12 und des inneren Doms 13 bevorzugt näherungsweise gleich groß, um eine homogene magnetische Flussdichte unter Berücksichtigung der unterschiedlichen Streufelder im Ferritkern 11 zu erzielen. Die Verwendung von Ferritkernen mit anderer Geometrie ist ebenfalls möglich. Beispielsweise können quadratische oder rechteckige Kerne mit runden oder quadratischen bzw. rechteckigen Ferritkernen eingesetzt werden. Auch Spulen ohne Spulenkörper, z.B. mit miteinander verklebten Leitern können verwendet werden.

Zur jeweiligen Frontplatte 3 hin sind die Ferritkerne 11 offen, wohingegen auf der gegenüberliegenden Seite der äußere Rand 12 und der innere Dom 13 über einen Topfboden miteinander verbunden sind. Die Spule 10 ist jeweils in den hier ringförmigen Graben zwischen dem äußeren Rand 12 und dem inneren Dom 13 eingelegt. Ein eventuell noch vorhandener Spalt zwischen dem äußeren und inneren Rand der Spule 10 und dem Ferritkern 11 kann mit einem wärmeleitenden Medium ausgefüllt sein.

Im Betrieb werden zur kontaktlosen induktiven Energieübertragung das Primärteil 1 und das Sekundärteil 1' mit ihren Frontplatten 3, 3' aufeinander zuweisend in geringem Abstand zu einander gebracht. In der Figur 1 ist dieser Abstand, der einen Übertragungsspalt bildet, als Übertragungsabstand zo eingezeichnet. Die Größe eines zulässigen Übertragungsabstands zo liegt im Bereich von 0 bis einigen Millimetern oder Zentimetern, abhängig von der Größe, insbesondere dem Durchmesser der Spulen 10 bzw. Ferritkerne 11. Die Richtung entlang der Achse der primärseitigen Spule 10 wird nachfolgend als z-Richtung, die zugeordnete Achse als z-Achse bezeichnet. Senkrecht dazu verlaufen in der Ebene der Frontplatte 3 die x- und y-Richtungen bzw. Achsen.

Im Betrieb wird die primärseitige Spule 10, nachfolgend auch als Primärspule 10 bezeichnet, mit einem Wechselstrom beaufschlagt. Bevorzugt ist dabei aus der Primärspule 10 und einem Resonanzkondensator ein Resonanzkreis gebildet, dessen Frequenz im Bereich von einigen Kilohertz (kHz) bis einigen hundert kHz liegt, wobei eine Frequenz im Bereich von einigen zehn kHz besonders bevorzugt ist. Der Wechselstrom, mit der die Primärspule 10 beaufschlagt wird, wird von einem Wechselrichter bereitgestellt. Im Wechselrichter kann zur Erzeugung der Wechselspannung dabei beispielsweise ein Pulsweitenmodulationsverfahren (PWM-Verfahren) eingesetzt werden. Der Wechselrichter befindet sich zusammen mit Überwachungs- und Steuereinrichtungen auf einer Platine 20 innerhalb des Gehäuses 2 des Primärteils 1. In der Figur sind beispielhaft auf der Platine 20 elektronische Komponenten 21 eingezeichnet. Zum Schutze des Wechselrichters vor einer Resonanzüberhöhung der Amplitude am Resonanzkreis, gebildet aus dem genannten Resonanzkondensator und der Primärspule 10, wird der Resonanzkreis leicht überresonant, also bei Frequenzen oberhalb der Resonanzfrequenz, betrieben.

Eine Energieübertragung erfolgt bei magnetischer Kopplung zwischen der Primärspule 10 und sekundärseitigen Spule 10', nachfolgend Sekundärspule 10' genannt. Durch die vorhandenen Ferritkerne 11 und 11' ist die Kopplung besonders effizient. In der Sekundärspule 10' wird eine Spannung induziert, die nach Gleichrichtung, Spannungswandlung - und ggf. Spannungsstabilisierung - als Ausgangsspannung am Anschlusskabel 5' zur Abgabe der übertragenen Energie bereitsteht. Die elektronischen Komponenten auf der Sekundärseite sind ebenfalls auf einer Platine 20' angeordnet, wobei hier wiederum beispielhaft einzelne elektronische Komponenten 21' eingezeichnet sind. Vorteilhaft kann die Sekundärspule einen Mittelabgriff aufweisen, so dass ein Synchrongleichrichter verwendet werden kann.

Sowohl beim Primärteil 1 als auch beim Sekundärteil 1' können zwischen dem jeweiligen Ferritkern 11 und der Platine 20 wärmeleitende Elemente, z.B. Wärmeleitmatten 14, angeordnet sein. Insbesondere bei der Primärseite, aber auch bei der Sekundärseite stellen die auf der Platine 20 angeordneten elektronischen Bauteile 21 eine Verlustquelle im Übertragungsweg dar. Die von diesen Bauelementen 21 erzeugte Verlustwärme wird über die Wärmeleitmatten 14 auf den Ferritkern 11 übertragen. Dadurch wärmt sich der Ferritkern 11 im Betrieb auf eine höhere Betriebstemperatur auf, als dieses ohne die thermische Kopplung an die Platine 20 der Fall wäre.

Bei geeigneten Ferritmaterialien für die Ferritkerne 11 sind über einem weiten Frequenz- und Magnetisierungsbereich die Verluste bei geringerer Temperatur im Ferritkern 11 größer als bei höherer Temperatur. Der zuvor beschriebene Eintrag der Verlustleistung der elektronischen Komponenten als Wärme in den Ferritkern 11 erhöht dessen Temperatur und senkt folglich die durch Ummagnetisierungsvorgänge hervorgerufene Verlustleistung im Ferritkern 11. Dadurch wird der Gesamtwirkungsgrad des Übertragungssystems verbessert. Dieser Effekt kann sowohl auf der Primärseite als auch auf der Sekundärseite genutzt werden. Gleichzeitig wird der vorhandene Ferritkern 11, 11' durch die thermische Kopplung als Kühlkörper für die Elektronikkomponenten 21, 21' eingesetzt, wodurch sich als zusätzlicher Effekt eine Material- und somit Kosteneinsparung ergibt. Anstelle der Wärmeleitmatten 14 kann beispielsweise auch eine Vergussmasse eingesetzt werden, um die Platine 20 und den Ferritkern 11 thermisch zu koppeln.

Bei dem dargestellten Ausführungsbeispiel sind keine ineinandergreifenden Führungs- oder Positionierungselemente vorgesehen, die das Primärteil 1 und das Sekundärteil 1' bei einem Zusammenfügen lateral zueinander ausrichten würden. Durch das Fehlen solcher Elemente können das Primärteil 1 und das Sekundärteil 1' auch durch eine Lateralbewegung, das heißt eine Bewegung in x- und/oder y-Richtung in die Betriebsposition gebracht werden bzw. von einander getrennt werden. Dieses erweist sich gerade im Automatisierungsbereich als besonders vorteilhaft, da eine zusätzliche axiale Bewegung von Primär- und Sekundärteil 1,1' aufeinander zu zum Etablieren oder Trennen einer Verbindung nicht erforderlich ist. Je nach geplantem Anwendungszweck können in alternativen Ausgestaltungen derartige Führungs- oder Positionierungselemente jedoch auch vorgesehen sein.

Die Ferritkerne 11, 11' erlauben eine hohe magnetische Flussdichte, durch die eine effiziente Energieübertragung auch bei kleinem Spulenvolumen möglich ist. Die Übertragung ist dabei relativ tolerant gegenüber einer lateralen Verschiebung des Primärteils 1 und des Sekundärteils 1' gegeneinander. Dieses ist beispielsweise im Automatisierungsbereich von hohem Vorteil, da auf eine hohe Positioniergenauigkeit zur Etablierung einer konventionellen kontaktbehafteten Steckverbindung verzichtet werden kann.

Dennoch ist eine Kenntnis der Position des Sekundärteils 1' gegenüber dem Primärteil 1 vorteilhaft, um ausschließen zu können, dass eine Übertragung, die bei kleinen Leistungen initiiert werden kann, nicht im Betrieb bei höheren zu übertragenden Leistungen unerwartet zusammenbricht. Außerdem deutet eine sich ändernde Position der beiden Teile zueinander auf eventuelle mechanische oder elektromechanische Probleme z.B. bei dem Roboter, bei dem das System zur Energieübertragung verwendet wird, hin und kann daher eine für die Betriebssicherheit relevante Information darstellen.

Anmeldungsgemäß weist das Primärteil 1 des Systems zur Energieübertragung zur Positionserkennung des Sekundärteils 1' mindestens einen Magnetfeldsensor auf, der das Streufeld der Spulen 10, 10' ermittelt. Im dargestellten Ausführungsbeispiel sind vier Hilfsspulen 30a, 30b, 30c und 30d als Magnetfeldsensoren eingesetzt, die in vier Quadranten der Frontplatte 3 neben der Spule 10 angeordnet sind. Je zwei der Hilfsspulen 30a, 30c bzw. 30b, 30d liegen sich symmetrisch zum Mittelpunkt der Spule 10 gegenüber. Die Position der vier Hilfsspulen 30a, 30b, 30c und 30d ist im Schnittbild der Figur 2 gut zu erkennen. Wenn im Folgenden nicht explizit auf eine einzelne der Hilfsspulen 30a, 30b, 30c und 30d Bezug genommen wird wird, werden die Hilfsspulen 30a, 30b, 30c und 30d zusammenfassend mit dem Bezugszeichen 30 gekennzeichnet.

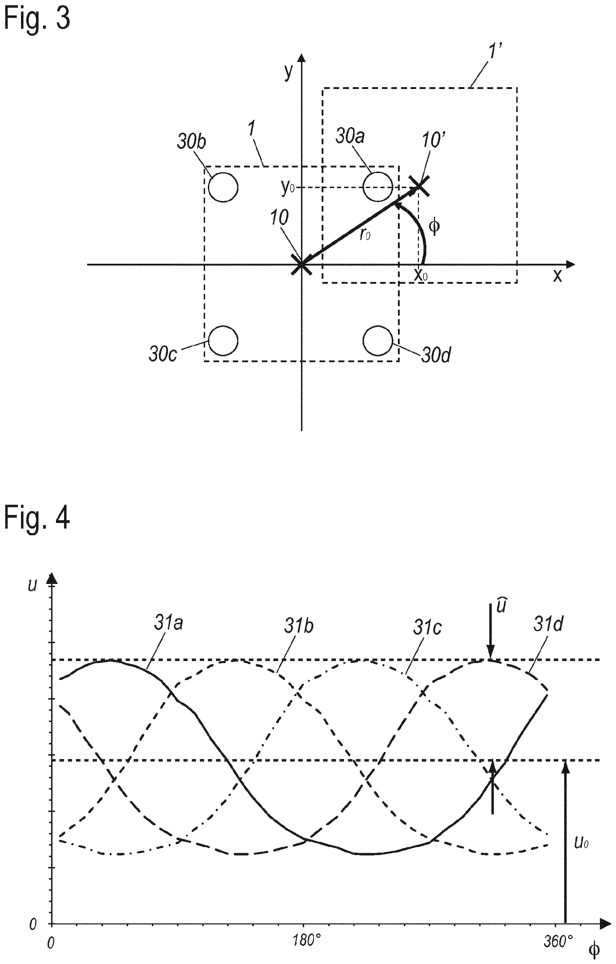

Die Hilfsspulen 30 stellen Empfangsspulen dar, in denen bedingt durch das Streufeld von Primär- und Sekundärspule 10 bzw. 10' jeweils ein Signal induziert wird, das von einer Auswerteschaltung auf der Platine 20 des Primärteils 1 ausgewertet wird. Die Höhe der in den Hilfsspulen 30 induzierten Signale ist sowohl von dem Abstand zo zwischen Primär- und Sekundärteil 1,1' abhängig, als auch von einem lateralen Versatz in x- und y-Richtung. Dieses wird nachfolgend anhand der Figuren 3 und 4 detaillierter erläutert.

Figur 3 zeigt schematisch ein Primär- und ein Sekundärteil 1,1' eines Systems zur induktiven Energieübertragung, die zueinander seitlich (lateral) versetzt sind. In kartesischen Koordinaten beträgt der Versatz xo in x-Richtung und yo in y-Richtung. Zusätzlich kann ein in dieser Darstellung nicht sichtbarer Abstand von zo zwischen den beiden Teilen 1,1' vorliegen. Der laterale Versatz xo und yo kann auch in Polarkoordinaten ausgedrückt werden und dann über einen radialen Abstand ro der Mittelpunkte der Spulen 10 bzw. 10' beschrieben werden, sowie einen Winkel φ zwischen einem Abstandsvektor und der x-Achse.

Figur 4 zeigt beispielhaft, wie sich Signalamplituden 31 (hier Spannungsamplituden) in den vier Hilfsspulen 30 ändern, wenn bei festem Abstand zo und betragsmäßig festem radialen Abstand ro das Sekundärteil 1' kreisförmig um die z-Achse des Primärteils 1 herum bewegt wird. Es ist eine sich ergebende jeweilige Signalamplitude 31a, 31b, 31c und 31d der Hilfsspulen 30a, 30b, 30c und 30d abhängig vom Winkel φ dargestellt. Es zeigt sich, dass in erster Näherung eine jeweils sinusförmige Abhängigkeit der Signalamplitude 31 von dem Winkel φ besteht. Die Sinuskurven weisen eine gleiche Amplitude û und einen ebenfalls für alle Sinuskurven gleichen Offset uo auf.

Dabei hängt die eingezeichnete Amplitude û überwiegend von der Größe des radialen Abstands ro ab, wohingegen der Offset uo überwiegend von dem Abstand zo zwischen Primär- und Sekundärteil 1, 1' abhängt. Diese spezielle Abhängigkeit, die bei Verwendung eines Ferritkerns 11, 11' bei der Primärspule 10 bzw. der Sekundärspule 10' gilt, begünstigt und vereinfacht eine Trennung des radialen Abstands ro (bzw. des lateralen Versatzes xo, yo) und des axialen Abstand zo. Bei Verwendung von Luftspulen ohne Ferritkern beeinflussen metallische Objekt in der Umgebung und Streufelder anderer benachbarter Komponenten die gemessenen Signalamplituden verstärkt mit zunehmendem axialen Abstand der Spulen, was eine Bestimmung des axialen Abstand zo erschwert.

In beiden Fällen ist die Abhängigkeit im Wesentlichen linear, insbesondere bei (verglichen mit der Größe der Spulen 10, 10') kleinen Werten für den radialen Abstand ro und den Abstand zo. Die Proportionalitätsfaktoren für diese linearen Abhängigkeiten können in Messreihen bei konstantem Strom einer vorgegebenen Höhe durch die Primärspule 10 mit bekanntem radialen Abstand ro und bekanntem Abstand z₀ für ein gegebenes System zur Energieübertragung zuvor ermittelt werden. Nachfolgend aufgenommene Messwerte zur Abstandsbestimmung werden dann im Hinblick auf die dann vorliegende Höhe des Stroms durch die Primärspule 10 auf die Bedingungen bei der Aufnahme der Proportionalitätsfaktoren skaliert.

Im Betrieb des Systems zur Energieübertragung wird dann für einen unbekannten Abstand zo, einen unbekannten radialen Abstand ro und einen unbekannten Winkel φ zunächst die Höhe der vier Signalamplituden 31a, 31b, 31c und 31d gemessen.

Durch Addition von zwei Signalamplituden 31a und 31c oder 31b und 31d der gegenüberliegenden Hilfsspulen 30a und 30c oder 30b und 30d hebt sich der sinusförmige Anteil der Signalamplituden 31 gegenseitig auf, wodurch die Größe des Offsets uo ermittelt werden kann. Um ein gutes Signal-zu Rauschverhältnis zu erzielen, kann der Offsets uo auch für beide Paare gegenüberliegender Hilfsspulen 31a, 31c und 31b, 31d und damit letztlich durch die Aufsummierung aller vier Signalamplituden 31a-31d bestimmt werden. Mit dem vorab ermittelten Proportionalitätsfaktor und einer Skalierung auf die Höhe des aktuellen Stroms durch die Primärspule 10 folgt aus der Größe des Offsets uo die Größe des Abstands zo.

Anschließend kann durch eine Differenzbildung von je zwei Signalamplituden 31a und 31c bzw. 31b und 31d jeweils zweier gegenüberliegender Hilfsspulen 30a und 30c bzw. 30b und 30d über Winkelfunktionen die Größe des Winkels φ bestimmt werden.

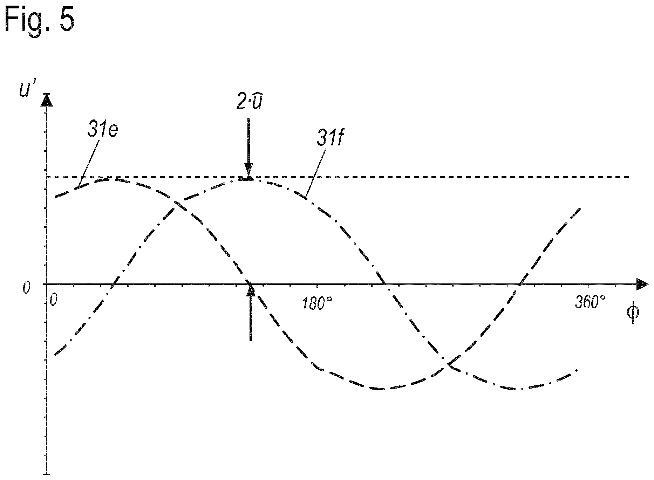

In der Figur 5 sind die Differenzen u' von jeweils zwei Signalen als Differenzamplituden 31e und 31f wiederum in Abhängigkeit des Winkels φ dargestellt. Das Differenzsignal 31e ist aus den Signalamplituden 31a und 31c gebildet und das Differenzsignal 31f aus den Signalamplituden 31b und 31d.

Die beiden Differenzsignale 31e und 31f verlaufen ebenfalls sinusförmig mit einer Phasenverschiebung von 90° zueinander. Die Differenzsignale 31e, 31f zeigen keinen Offset und die ihre Signalamplituden hängen nur noch vom Versatz, d.h. dem radialen Abstand ro ab. Mit dem vorab ermittelten Proportionalitätsfaktor folgt nach Skalierung auf die Höhe des aktuellen Stroms durch die Primärspule 10 aus einer der Amplituden der Differenzsignale 31e, 31f die Größe des radialen Abstands ro. Die Amplitude der Differenzsignale 31e, 31f ist dabei doppelt so groß wie die der Amplitude û der Signalamplituden 31a-d.

Aus der Phasenlage einer der Differenzsignale 31e oder 31f kann schließlich über trigonometrische Funktionen der Winkel φ, d.h. die Richtung in der der Versatz vorliegt, bestimmt werden. Die Phasenlage der Differenzsignale 31e oder 31f kann vorteilhaft an ihren Nulldurchgangsstellen ermittelt werden.

Zusammenfassend kann anmeldungsgemäß mithilfe der vier Hilfsspulen 30 aus der Höhe der in ihnen durch das Streufeld der Spulen 10, 10' induzierte Signal sowohl der radiale Abstand ro, als auch die Richtung (Winkel φ) eines seitlichen Versatzes zwischen Primär- und Sekundärteil 1,1' bestimmt werden, und auch der Abstand zo zwischen Primär- und Sekundärteil 1, 1'. Die Informationen über den lateralen Versatz können aus den Polarkoordinaten (radialer Abstand ro, Winkel φ) auch in kartesischen Koordinaten (xo, yo) umgerechnet und angegeben werden.

Es kann vorgesehen sein, diese Informationen über seitlichen Versatz und Abstand über einen Datenkanal des Primärteils 1 auszugeben. Anhand dieser Informationen kann beispielsweise von einer Automatisierungssteuerung ein Problem bei der Positionierung von Primär- und Sekundärteil 1,1' zueinander erkannt werden, das auf einen Fehler bei einem Roboter, der das System zur Energieübertragung verwendet, hinweist. Weiter kann vorgesehen sein, die Energieübertragung vom Primärteil 1 zum Sekundärteil 1' zu unterbrechen bzw. bereits in einem Initialisierungsschritt gar nicht erst zu etablieren, wenn ein ermittelter seitlicher Versatz (xo, yo bzw. ro) und/oder ein ermittelter Abstand zo über festgelegten Grenzwerten liegen. Die Grenzwerte können dabei in Form von Tabellen oder einem Funktionszusammenhang berücksichtigen, inwieweit eine gleichzeitig vorliegende Kombination von seitlichem Versatz und Abstand zugelassen sind.

Das dargestellte Verfahren hat den Vorteil, dass eine nicht korrekt positionierte Sekundärseite primärseitig erkannt wird. Es ist keine Rückmeldung von dem Sekundärteil 1' an das Primärteil 1 notwendig, um ein sicheres Betreiben des Primärteils 1 zu garantieren.

In einer alternativen Ausgestaltung des Steckverbinders ist ein auf einer Rückmeldung eines Sekundärteils an ein Primärteil basierender Sicherheitsmechanismus im Hinblick auf die Positionierung zusätzlich einsetzbar.

In einer weiteren alternativen Ausgestaltung des Steckverbinders kann zusätzlich vorgesehen sein, Informationen über den seitlichen Versatz und/oder den Abstand anhand einer Verstimmung des Resonanzkreises über die Resonanzfrequenz ggf. in Verbindung mit dem in der Primärspule fließenden Strom zu ermitteln. Diese zusätzliche Messung kann als Kontrollmessung zur zuvor beschriebenen Abstandsbestimmung über die Hilfsspulen 30 dienen, um die Übertragungssicherheit zusätzlich zu erhöhen.

### Bezugszeichenliste

- 1: Primärteil
- 1': Sekundärteil
- 2,2': Gehäuse
- 3, 3': Abdeckplatte
- 4,4': Anschlusskabel
- 5, 5': Kabeldurchführung
- 10: Primärspule
- 10': Sekundärspule
- 11, 11': Ferritkern
- 12, 12': äußerer Rand
- 13, 13': innerer Dom
- 14, 14': Wärmeleitmatte
- 20,20': Platine
- 21, 21': elektronische Bauelemente
- 30a-d: Hilfsspule
- 31a-d: Signalamplitude
- 31e, 31f: Differenzsignal
- xo, yo: seitlicher Versatz (in kartesischen Koordinaten)
- ro: radialer Abstand (Polarkoordinaten)
- φ: Winkel (Polarkoordinaten)
- z₀: Abstand
- u: Höhe der Signalamplitude
- û: Amplitude
- uo: Offset

## Patentansprüche

1. System zur kontaktlosen induktiven Energieübertragung von einem Primärteil (1) zu einem Sekundärteil (1'), die jeweils mindestens eine Spule (10, 10') aufweisen, die induktiv miteinander koppelbar sind, wobei das Primärteil (1) und/oder das Sekundärteil (1') mindestens einen Magnetfeldsensor aufweist und dazu eingerichtet ist, anhand eines von den Spulen (10, 10') erzeugten und mithilfe des mindestens einen Magnetfeldsensors gemessenen Magnetfelds einen lateralen Versatz des Sekundärteils (1') gegenüber dem Primärteil (1) zu bestimmen, **dadurch gekennzeichnet, dass** das System weiter dazu eingerichtet ist, dass das von dem mindestens einen Magnetfeldsensor gemessene Magnetfeld ein während der Energieübertragung erzeugtes Streufeld der mindestens eine Spule (10) des Primärteils (1) und der mindestens einen Spule des Sekundärteils (1') ist und anhand des von dem mindestens einen Magnetfeldsensor gemessenen Streufelds einen Abstand (zo) entlang einer Achse der primärseitigen Spule (10) vom Sekundärteil (1') zum Primärteil (1) zu bestimmen.

2. System nach Anspruch 1, bei dem der mindestens eine Magnetfeldsensor mindestens eine Hilfsspule (30) ist, in der die Spulen (10, 10') ein Signal induzieren.

3. System nach Anspruch 1 oder 2, bei dem der mindestens eine Magnetfeldsensor im Primärteil (1) angeordnet ist.

4. System nach einem der Ansprüche 1 bis 3, bei dem der mindestens eine Magnetfeldsensor im Primär- oder Sekundärteil (1, 1') seitlich versetzt zu der jeweiligen Spule (10, 10') angeordnet ist.

5. System nach Anspruch 4, bei dem mindestens zwei Magnetfeldsensoren in dem Primär- und/oder Sekundärteil (1, 1') angeordnet sind, die paarweise symmetrisch um eine Längsachse der jeweiligen Spule (10, 10') angeordnet sind.

6. System nach Anspruch 4, bei dem vier Magnetfeldsensoren in dem Primär- und/oder Sekundärteil (1, 1') um die jeweilige Spule (10, 10') herum angeordnet sind.

7. Betriebsverfahren für ein System zur kontaktlosen induktiven Energieübertragung von einer Spule (10) eines Primärteils (1) zu einer Spule (10') eines Sekundärteils (1') , wobei anhand eines von den Spulen (10, 10') erzeugten und mit mindestens einem Magnetfeldsensor gemessenen Magnetfelds ein lateraler Versatz des Sekundärteils (1') zum Primärteil (1) bestimmt wird **dadurch gekennzeichnet, dass** die mindestens eine Spule (10) des Primärteils (1) und die mindestens eine Spule des Sekundärteils (1') während der Energieübertragung ein Streufeld erzeugen, das von dem mindestens einen Magnetfeldsensor gemessen wird, und dass anhand des von dem mindestens einen Magnetfeldsensor gemessenen Streufelds darüber hinaus ein Abstand (zo) entlang einer Achse der primärseitigen Spule (10) vom Sekundärteil (1') zum Primärteil (1) bestimmt wird.

8. Betriebsverfahren nach Anspruch 7, bei dem der laterale Versatz und der Abstand (zo) anhand von Messwerten von vier Magnetfeldsensoren ermittelt werden, die in dem Primärteil (1) um dessen Spule (10) herum angeordnet sind.

9. Betriebsverfahren nach Anspruch 7 oder 8, bei dem als mindestens ein Magnetfeldsensor mindestens eine Hilfsspule (30) eingesetzt wird, wobei ein in der mindestens einen Hilfsspule (30) induziertes Signal gemessen wird.

10. Betriebsverfahren nach Anspruch 9, bei dem als Signal eine Signalamplitude (31), insbesondere eine Spannungsamplitude, der mindestens einen Hilfsspule (30) ausgewertet wird.

11. Betriebsverfahren nach Anspruch 10, bei dem die Signalamplituden (31) von jeweils zwei paarweise gegenüberliegenden Hilfsspulen (30) miteinander verrechnet werden, um den lateralen Versatz des Sekundärteils (1') gegenüber dem Primärteil (1) zu bestimmen und um den Abstand (zo) vom Sekundärteil (1') zum Primärteil (1) zu bestimmen.

12. Betriebsverfahren nach Anspruch 11, bei dem der laterale Versatz einen radialen Abstand (ro) zwischen Achsen der Spulen (10, 10') sowie einen Winkel (φ) zwischen einem Abstandsvektor, der von der Achse der Spule (10) des Primärteils (1) zu der Achse der Spule (10') des Sekundärteils (1') reicht, und einer definierten Raumrichtung umfasst.

13. Betriebsverfahren nach Anspruch 11 oder 12, bei dem eine Energieübertragung von dem Primärteil (1) zu dem Sekundärteil (1') unterbunden wird, wenn der lateralen Versatz des Sekundärteils (1') gegenüber dem Primärteil (1) und/oder der Abstand (zo) vom Sekundärteil (1') zum Primärteil (1) einen vorgegebenen Grenzwert überschreitet.

## Claims

1. A system for a contactless, inductive transmission of energy from a primary part (1) to a secondary part (1') which each comprise at least one coil (10, 10') which can be inductively coupled to each other, wherein the primary part (1) and/or the secondary part (1') comprise at least one magnetic field sensor and are arranged for determining a lateral offset of the secondary part (1') relative to the primary part (1) using a magnetic field generated by the coils (10, 10') and measured with the aid of the at least one magnetic field sensor, **characterized in that** the system is furthermore arranged in a way that the magnetic field measured by the at least one magnetic field sensor is a stray field of the at least one coil (10) of the primary part (1) and the at least one coil of the secondary part (1') during the transmission of energy, and is arranged to determine an interval (zo) along an axis of the primary side coil (10) from the secondary part (1') to the primary part (1) using the stray field measured by the at least one magnetic field sensor.

2. The system according to Claim 1, in which the at least one magnetic field sensor is at least one auxiliary coil (30) in which the coils (10, 10') induce a signal.

3. The system according to Claim 1 or 2, in which the at least one magnetic field sensor is arranged in the primary part (1).

4. The system according to one of Claims 1 to 3, in which the at least one magnetic field sensor in the primary or in the secondary part (1, 1') is arranged laterally offset to the particular coil (10, 10').

5. The system according to Claim 4, in which at least two magnetic field sensors are arranged in the primary and/or in the secondary part (1, 1') which are arranged in pairs symmetrically around a longitudinal axis of the particular coil (10, 10').

6. The system according to Claim 4, in which four magnetic field sensors are arranged in the primary and/or in the secondary part (1, 1') around the particular coil (10, 10').

7. An operating method for a system for the contactless, inductive transmission of energy from a coil (10) of a primary part (1) to a coil (10') of the secondary part (1'), wherein a lateral offset of the secondary part (1') to the primary part (1) is determined using a magnetic field generated by the coils (10, 10') and measured with at least one magnetic field sensor, **characterized in that** the at least one coil (10) of the primary part (1) and the at least one coil of the secondary part (1') generate a stray field during the transmission of energy that is measured by the at least one magnetic field sensor, and that in addition an interval (zo) is determined along an axis of the primary coil (10) from the secondary part (1') to the primary part (1) using the stray field measured by the at least one magnetic field sensor.

8. The operating method according to Claim 7, in which the lateral offset and the interval (zo) are determined using measured values from four magnetic field sensors which are arranged in the primary part (1) around its coil (10).

9. The operating method according to Claim 7 or 8, in which at least one auxiliary coil (30) is used as at least one magnetic field sensor, wherein a signal induced in the at least one auxiliary coil (30) is measured.

10. The operating method according to Claim 9 in which a signal amplitude (31), in particular a voltage amplitude of the at least one auxiliary coil (30) is evaluated as signal.

11. The operating method according to Claim 10, in which the signal amplitudes (31) from each two auxiliary coils (30) opposite one another in pairs are calculated with one another in order to determine the lateral offset of the secondary part (1') relative to the primary part (1) and in order to determine the axial interval (zo) from the secondary part (1') to the primary part (1).

12. The operating method according to Claim 11, in which the lateral offset has a radial interval (ro) between axes of the coils (10, 10') and has an angle (□□ between an interval vector which extends from the axis of the coil (10) of the primary part (1) to the axis of the coil (10') of the secondary part (1') and between a defined spatial direction.

13. The operating method according to Claim 11 or 12, in which a transmission of energy from the primary part (1) to the secondary part (1') is suppressed when the lateral offset of the secondary part (1') relative to the primary part (1) and/or the interval (zo) from the secondary part (1') to the primary part (1) exceeds a given boundary value.

## Revendications

1. Système de transmission d'énergie inductive sans contact d'une partie primaire (1) à une partie secondaire (1'), dont chacune présente au moins une bobine (10, 10') pouvant être couplées entre elles par induction, la partie primaire (1) et/ou la partie secondaire (1') présentant au moins un capteur de champ magnétique et étant conçue pour déterminer un décalage latéral de la partie secondaire (1') par rapport à la partie primaire (1) sur la base d'un champ magnétique généré par les bobines (10, 10') et mesuré à l'aide dudit au moins un capteur de champ magnétique, **caractérisé en ce que** le système est en outre conçu de telle sorte que le champ magnétique mesuré par ledit au moins un capteur de champ magnétique est un champ parasite de ladite au moins une bobine (10) de la partie primaire (1) et de ladite au moins une bobine de la partie secondaire (1') qui est généré pendant la transmission d'énergie et pour déterminer une distance (zo) le long d'un axe de la bobine côté primaire (10) entre la partie secondaire (1') et la partie primaire (1) à l'aide du champ parasite mesuré par ledit au moins un capteur de champ magnétique.

2. Système selon la revendication 1, dans lequel ledit au moins un capteur de champ magnétique est au moins une bobine auxiliaire (30) dans laquelle les bobines (10, 10') induisent un signal.

3. Système selon la revendication 1 ou 2, dans lequel ledit au moins un capteur de champ magnétique est disposé dans la partie primaire (1).

4. Système selon l'une des revendications 1 à 3, dans lequel ledit au moins un capteur de champ magnétique est disposé dans la partie primaire ou secondaire (1, 1') en étant décalé latéralement par rapport à la bobine respective (10, 10').

5. Système selon la revendication 4, dans lequel au moins deux capteurs de champ magnétique sont disposés dans la partie primaire et/ou secondaire (1, 1 '), qui sont disposés symétriquement par paires autour d'un axe longitudinal de la bobine respective (10, 10').

6. Système selon la revendication 4, dans lequel quatre capteurs de champ magnétique sont disposés dans la partie primaire et/ou secondaire (1, 1') autour de la bobine respective (10, 10').

7. Procédé de fonctionnement d'un système de transmission d'énergie inductive sans contact d'une bobine (10) d'une partie primaire (1) à une bobine (10') d'une partie secondaire (1'), dans lequel un décalage latéral de la partie secondaire (1') par rapport à la partie primaire (1) est déterminé sur la base d'un champ magnétique généré par les bobines (10, 10') et mesuré avec au moins un capteur de champ magnétique, **caractérisé en ce que** ladite au moins une bobine (10) de la partie primaire (1) et ladite au moins une bobine de la partie secondaire (1') génèrent, pendant la transmission d'énergie, un champ parasite qui est mesuré par ledit au moins un capteur de champ magnétique et qu'une distance (zo) le long d'un axe de la bobine côté primaire (10) entre la partie secondaire (1') et la partie primaire (1) est en outre déterminée à l'aide du champ parasite mesuré par ledit au moins un capteur de champ magnétique.

8. Procédé de fonctionnement selon la revendication 7, dans lequel le décalage latéral et la distance (zo) sont déterminés à partir des valeurs mesurées par quatre capteurs de champ magnétique qui sont disposés dans la partie primaire (1) autour de sa bobine (10).

9. Procédé de fonctionnement selon la revendication 7 ou 8, dans lequel au moins une bobine auxiliaire (30) est utilisée comme au moins un capteur de champ magnétique, un signal induit dans ladite au moins une bobine auxiliaire (30) étant mesuré.

10. Procédé de fonctionnement selon la revendication 9, dans lequel une amplitude de signal (31), en particulier une amplitude de tension, de ladite au moins une bobine auxiliaire (30) est évaluée comme signal.

11. Procédé de fonctionnement selon la revendication 10, dans lequel les amplitudes de signal (31) de chaque fois deux bobines auxiliaires (30) opposées par paires sont mutuellement compensées pour déterminer le décalage latéral de la partie secondaire (1') par rapport à la partie primaire (1) et pour déterminer la distance (zo) entre la partie secondaire (1') et la partie primaire (1).

12. Procédé de fonctionnement selon la revendication 11, dans lequel le décalage latéral comprend une distance radiale (ro) entre les axes des bobines (10, 10') ainsi qu'un angle (φ) entre un vecteur distance, qui s'étend de l'axe de la bobine (10) de la partie primaire (1) à l'axe de la bobine (10') de la partie secondaire (1'), et une direction spatiale définie.

13. Procédé de fonctionnement selon la revendication 11 ou 12, dans lequel une transmission d'énergie de la partie primaire (1) à la partie secondaire (1') est empêchée si le décalage latéral de la partie secondaire (1') par rapport à la partie primaire (1) et/ou la distance (zo) entre la partie secondaire (1') et la partie primaire (1) dépasse une valeur limite prédéfinie.
